# EUROPEAN PATENT APPLICATION

(11) **EP 3 848 808 A1**
(43) Date of publication of application: **14.07.2021**
(21) Application number: 19808665.4
(22) Date of filing: 02.08.2019
(51) Int. Cl.: G06F 11/14

(54) **METHOD AND SYSTEM FOR RECOVERING DELETED FILE BASED ON FAT32 FILE SYSTEM**

(30) Priority: 22.11.2018 CN 201811401305
(71) Applicant: XIAMEN MEIYA PICO INFORMATION CO., LTD, Xiamen, Fujian 361000 (CN)
(72) Inventor: SHAO, Bingyang, Xiamen, Fujian 361000 (CN); FAN, Wei, Xiamen, Fujian 361000 (CN); SHEN, Changda, Xiamen, Fujian 361000 (CN); WU, Shaohua, Xiamen, Fujian 361000 (CN)
(74) Representative: Petraz, Gilberto Luigi
(86) International application number: PCT/CN2019/099120
(87) International publication number: WO 2020/103493

(57) **Abstract**

A method and system for recovering deleted files based on a FAT32 file system is disclosed. A first root directory FDT information set is formed by reading FDT information of each directory entry Rᵢ; FDT information of each directory entry Ri in the first root directory FDT information set F_{DT}S = {R₁, R₂, ..., R_{N}} is parsed to obtain attributes of the FDT information of a current directory entry Rᵢ, and whether each directory entry Rᵢ in the first root directory FDT information set represents a directory entry of a file or a directory entry of a folder is determined from the attributes; a starting sector number of the directory entry Rᵢ is calculate to obtain an actual physical position of the current file, and information of the current file directory entry Rᵢ is recursively parse out; and the FDT information of the directory entry Rᵢ of all directories in the current file system is parsed to obtain the actual physical position of the current file or folder and information of the directory entry Rᵢ. Fast recovery of the deleted file is effectively realized using a file feature-combined algorithm of dynamically calculating FDT cluster higher bits and a directory entry feature and information match-combined algorithm of dynamically calculating FDT cluster higher bits.

## Description

### RELATED APPLICATION

The present application claims the priority of Chinese Patent Application No. 201811401305.8 filed on November 22, 2018, the entire disclosure of which is incorporated herein by reference.

### TECHNICAL FIELD

The present disclosure relates to the field of computer data recovery technologies, and in particular, to a method and system for recovering deleted files based on a FAT32 file system.

### BACKGROUND

The FAT32 file system is one of the most widely used file systems in the Windows operating system, and is used dominantly on storage media such as SD cards and USB flash drives. The FAT32 file system consists of reserved sectors (DBR), file allocation table sectors (FAT), root directory sectors (ROOT), and data sectors (DATA). The reserved sectors are located at the start position of the FAT32 file system, and the first one of the reserved sectors is a DOS bootload record of the FAT32 file system, i.e., DBR, which stores information of the FAT32 file system on the disk, such as the cluster size, the number of reserved sectors, the number of total sectors, the root directory start position, the size and number of the FAT tables. The FAT tables are used to describe the allocation status of clusters in the data sectors and the position where the data of a file or directory is stored in the disk. Each FAT table entry consists of 4 bytes, and records the addresses of each cluster of the data sectors. The root directory sectors are located in the first data cluster of the data sectors. When a file or directory is created in the root directory of the file system, the directory entries of the corresponding file or directory have to be written in the root directory sectors. The data sectors store the directory entry information for all data as well as actual file data.

The directory entry FDT is a critical data structure for the FAT32 file system. In the FAT32 file system, all files and folders are assigned a 32-byte directory entry to store metadata information for the files or folders. The directory entries of the FAT32 file system are divided into short file name directory entries, long file name directory entries, "." and ".." directory entries, and volume directory entries.

The recovery technology of deleted files of the FAT32 file system has been a hot spot in the field of computer security. At present, there are many mature FAT32 file system deleted data recovery technologies and related data recovery software on the market. These recovery technologies and recovery software involves simply finding and analyzing the FDT directory entries of the FAT32 file system. Therefore, these recovery software cannot correctly recover the data of respective FAT32 partitions if the deleted disk contains multiple FAT32 file system partitions.

There are mainly two existing recovery algorithms for the FAT32 file system. One is to find the file record of the deleted file in the FAT table and parse it to recover the deleted file. Another one is to search the FDT table directly in the disk and parse it to recover the deleted file. If there are multiple FAT32 partitions in the original disk, and the partitions are formatted and deleted, then the deleted file cannot be recovered correctly by the above two methods.

In the patent document with a publication No. 105786653B, a file recovery method and system based on the FAT32 file system is disclosed, which comprises: acquiring a starting cluster number and a starting sector number of FDT directory entries in a current partition; respectively recording the starting cluster number and the starting sector number of the first valid FDT directory entry as the starting cluster number and the starting sector number of a root directory of the current partition; determining the next valid FDT directory entry; calculating a cluster size of the current partition; calculating a number of offset sectors of the root directory; calculating a theoretical starting sector number of the next valid FDT directory entry; if the starting sector number of the next valid FDT directory entry is not equal to the theoretical starting sector number, determining that there is a new partition; recovering the previous FDT directory entry. This disclosure implements recovery of files of the partitions in the case where there are multiple partitions in the disk and the partitions are formatted and deleted, thereby improving the data recovery effect. The recovery of the deleted files and the deleted folders of these existing FAT32 file systems is achieved by parsing the directory entries flagged as deleted in the directory entries. Files and folders in the FAT32 file system are managed through FDT. When a file or folder is deleted, the first byte of the corresponding FDT record is modified to E5. At the same time, the cluster higher bits used to index the actual data in FDT is cleared, resulting in the deleted file cannot be directly indexed to the data block, the deleted folder cannot be directly indexed to the data of the corresponding subfolder. At present, there is a method for dynamically positioning the start data of a deleted file by using the file data feature on the market, but so far, there is no effective method for dynamically positioning the subfolder data under the deleted folder.

### SUMMARY

In view of the problem described above that the cluster higher bits of the directory entry are cleared when the deletion of the deleted folder is performed, resulting in the positon to the subfolder cannot be correctly positioned by directly parsing the folder directory entries of the deleted folder, and the actually recovered directory may be incomplete, the present disclosure proposes a method for recovering deleted files based on a FAT32 file system, which comprises the following steps:
S1: initializing a file allocation table and a cluster status bitmap of the FAT32 file system;
S2: acquiring a root directory starting position from the FAT32 file system, reading FDT information of each directory entry Rᵢ to form a first root directory FDT information set which is denoted as F_{DT}S;
S3: parsing the FDT information of each directory entry Rᵢ in the first root directory FDT information set F_{DT}S = {R₁, R₂, ..., R_{N}} to obtain attributes of the FDT information of a current directory entry Rᵢ, and determining from the attributes whether each directory entry Rᵢ in the first root directory FDT information set represents a directory entry of a file or a directory entry of a folder;
S4: when the directory entry Rᵢ of the root directory represents the directory entry of the file, calculating a starting sector number of the directory entry Rᵢ, obtaining an actual physical position of a current file, and parsing information of the current file directory entry Rᵢ;
S5: when the directory entry Rᵢ represents the directory entry of the folder, calculating a starting sector number of the directory entry Rᵢ, obtaining an actual physical position of a current folder, reading the FDT information of the directory entry of each sub-file of the current folder to form a second root directory FDT information set, parsing the FDT information of each directory entry Rᵢ in the second root directory FDT information set to obtain attributes of the FDT information of the current directory entry, and continuing recursive parsing by performing steps S4 and S5 according to the attributes; and
S6: sequentially parsing the FDT information of the directory entry Rᵢ of all the directories in the current file system to obtain the actual physical position of the current file or folder, parsing the information of the current file directory entry Rᵢ, and ending the process.

Further, the file allocation table of the FAT32 file system is initalized to obtain cluster allocation information of the file system, with F_{AT}S indicating the file allocation table of FAT32, F_{AT}S = {C₁, C₂, ..., C_{N}}, wherein Cᵢ indicates whether a position space indicated by a cluster number has been used; the cluster status bitmap of the FAT32 file system is initialized, and cluster status information is cleared, with CS indicating the cluster status bitmap of FAT32, CS = {S₁, S₂, ..., S_{N}}, wherein Sᵢ represents data attributes stored in a corresponding cluster number position on a partition. Processing will be performed later based on whether the position space indicated by the cluster number in the file allocation table of the FAT32 has been used and the data attribute stored in the corresponding cluster number position on the partition in the cluster status bitmap.

Further, the attributes contained in the directory entry Rᵢ comprise a file name/folder name FileName, a file size FileSize which is equal to 0 in case of folder, a cluster number higher bits HClusterNumber, a cluster number lower bits LClusterNum, a access date AccessDate, a creation date Createdatee, a creation time CreateTime, and a creation time exact number of milliseconds CreateTimeRefinement. The file or folder will be processed separately in the following according to the attribute information contained in the directory item Rᵢ.

Further, the calculating the starting sector number of the directory entry Rᵢ in step S4 specifically comprises the following steps:
if each directory entry Rᵢ in the first root directory FDT information set represents a directory entry of a normal file, calculating the actual physical position of the current file from the cluster number lower bits recorded in the directory entry Rᵢ and the cluster number higher bits recorded in the directory entry Rᵢ according to a formula StartSector = (HClusterNumber ^{∗} 0x10000 + LClusterNum) ^{∗} N, wherein StartSector is the starting sector number of the directory entry Rᵢ, HClusterNumber is the cluster number higher bits of the directory entry Rᵢ, LClusterNum is the cluster number lower bits of the directory entry Rᵢ, and N is a cluster size of the directory entry Rᵢ in unit of sectors; and
if the directory entry Rᵢ in the first root directory FDT information set represents a directory entry of a deleted file, calculating, according to a formula StartSector = (HCNX ^{∗} 0x10000 + LClusterNum) ^{∗} N, the actual physical position of the current file from the cluster number lower bits recorded in the directory entry Rᵢ and the cluster number higher bits calculated with a file feature-combined algorithm of dynamically calculating FDT cluster higher bits, wherein StartSector is the starting sector number of the directory entry Rᵢ, HCNX is the cluster number higher bits calculated with the file feature-combined algorithm of dynamically calculating FDT cluster higher bits, LClusterNum is the cluster number lower bits of the directory entry Rᵢ, and N is a cluster size of the directory entry Rᵢ in unit of sectors. By calculating the starting sector number of the directory entry Rᵢ in the first root directory FDT information set, the actual physical position of the current normal file or the deleted file can be obtained, and the information of the directory entry Rᵢ of the current normal file or the deleted file in the first root directory FDT information set is parsed.

Further, the calculating the starting sector number of the directory entry Rᵢ in step S5 specifically comprises the following steps:
if the directory entry Rᵢ in the first root directory FDT information set represents a directory entry of a normal folder, calculating the actual physical position of the current folder from the cluster number lower bits recorded in the directory entry Rᵢ and the cluster number high bits recorded in the directory entry Rᵢ according to a formula StartSector = (HClusterNumber ^{∗} 0x10000 + LClusterNum) ^{∗} N, wherein StartSector is the starting sector number of the directory entry Rᵢ, HClusterNumber is the cluster number higher bits of the directory entry Rᵢ, LClusterNum is the cluster number lower bits of the directory entry Rᵢ, and N is a cluster size of the directory entry Rᵢ in unit of sectors; and
if the directory entry Rᵢ in the first root directory FDT information set represents a directory entry of a deleted folder, calculating, according to a formula StartSector = (HCNX ^{∗} 0x10000 + LClusterNum) ^{∗} N, the actual physical position of the deleted file from the cluster number lower bits recorded in the directory entry Rᵢ and the cluster number higher bits calculated with a directory entry feature and information match-combined algorithm of dynamically calculating FDT cluster higher bits, wherein StartSector is the starting sector number of the directory entry Rᵢ, HCNX is the cluster number higher bits calculated with the directory entry feature and information match-combined algorithm of dynamically calculating FDT cluster higher bits, LClusterNum is the cluster number lower bits of the directory entry Rᵢ, and N is a cluster size of the directory entry Rᵢ in unit of sectors. By calculating the starting sector number of the directory entry Rᵢ in the first root directory FDT information set, the actual physical position of the current normal folder or the deleted folder can be obtained, and the information of the directory entry Rᵢ of the current normal folder or the deleted folder in the first root directory FDT information set is parsed.

Further, the continuing recursive parsing by performing steps S4 and S5 according to the attributes in step S5 specifically comprises the following steps:
if the directory entry Rᵢ in the second root directory FDT information set represents a directory entry of a normal file, calculating the actual physical position of the current file from the cluster number lower bits recorded in the directory entry Rᵢ and the cluster number higher bits recorded in the directory entry Rᵢ according to a formula StartSector = (R_{B-}> HClusterNumber ^{∗} 0x10000 + LClusterNum) ^{∗} N, wherein StartSector is the starting sector number of the directory entry Rᵢ, HClusterNumber is the cluster number higher bits of the directory entry Rᵢ, LClusterNum is the cluster number lower bits of the directory entry Rᵢ, and N is a cluster size of the directory entry Rᵢ in unit of sectors; and
if the directory entry Rᵢ in the second root directory FDT information set represents a directory entry of a deleted file, calculating, according to a formula StartSector = (R_{B-}> HClusterNumber ^{∗} 0x10000 + LClusterNum) ^{∗} N, the actual physical position of the current file from the cluster number lower bits recorded in the directory entry Rᵢ and the cluster number higher bits calculated with a file feature-combined algorithm of dynamically calculating FDT cluster higher bits, wherein StartSector is the starting sector number of the directory entry Rᵢ, HCNX is the cluster number higher bits calculated with the file feature-combined algorithm of dynamically calculating FDT cluster higher bits, LClusterNum is the cluster number lower bits of the directory entry Rᵢ, and N is a cluster size of the directory entry Rᵢ in unit of sectors. By calculating the starting sector number of the directory entry Rᵢ in the second root directory FDT information set, the actual physical position of the current normal file or the deleted file can be obtained, and the information of the directory entry Rᵢ of the current normal file or the deleted file in the second root directory FDT information set is parsed.

Further, the continuing recursive parsing by performing steps S4 and S5 according to the attributes in step S5 specifically comprises the following steps:
if the directory entry Rᵢ in the second root directory FDT information set represents a directory entry of a normal folder, calculating the actual physical position of the current folder from the cluster number lower bits recorded in the directory entry Rᵢ and the cluster number high bits recorded in the directory entry Rᵢ according to a formula StartSector = (HClusterNumber ^{∗} 0x10000 + LClusterNum) ^{∗} N, wherein StartSector is the starting sector number of the directory entry Rᵢ, HClusterNumber is the cluster number higher bits of the directory entry Rᵢ, LClusterNum is the cluster number lower bits of the directory entry Rᵢ, and N is a cluster size of the directory entry Rᵢ in unit of sectors; and
if the directory entry Rᵢ in the second root directory FDT information set represents a directory entry of a deleted folder, calculating, according to a formula StartSector = (HCNX ^{∗} 0x10000 + LClusterNum) ^{∗} N, the actual physical position of the deleted file from the cluster number lower bits recorded in the directory entry Rᵢ and the cluster number higher bits calculated with a directory entry feature and information match-combined algorithm of dynamically calculating FDT cluster higher bits, wherein StartSector is the starting sector number of the directory entry Rᵢ, HCNX is the cluster number higher bits calculated with the directory entry feature and information match-combined algorithm of dynamically calculating FDT cluster higher bits, LClusterNum is the cluster number lower bits of the directory entry Rᵢ, and N is a cluster size of the directory entry Rᵢ in unit of sectors. By calculating the starting sector number of the directory entry Rᵢ in the second root directory FDT information set, the actual physical position of the current normal folder or the deleted folder can be obtained, and the information of the directory entry Rᵢ of the current normal folder or the deleted folder in the second root directory FDT information set is parsed.

Further, the file feature-combined algorithm of dynamically calculating FDT cluster higher bits specifically comprises the following steps:
M1: calculating a maximum cluster number from a total number of partition sectors PSC and a number of sectors per cluster SPC: MAX_CLUSYER = PSC / SPC;
M2: recording Rᵢ for a deleted folder FDT, recording a current file type, and acquiring a file signature corresponding to the current file type;
M3: letting HCNX = 0, and when HCNX <= MAX_CLUSYER and the actual cluster higher bits of the deleted folder has not been found, letting StartSector = (HCNX ^{∗} 0x10000 + LClusterNum) ^{∗} SPC to obtain a current possible starting sector;
M4: if a cluster usage status flag indicated by the StartSector position in the F_{AT}S cluster allocation information is "used", letting HCNX = HCNX + 1, and jumping to step M3;
M5: if the cluster status indicated by the StartSector position in the CS cluster status is a status of "used", letting HCNX = HCNX + 1, and jumping to step M3;
M6: if the cluster status indicated by the StartSector position in the CS cluster status is a signature corresponding to a non-current file type, letting HCNX = HCNX + 1, and jumping to step M3;
M7: if the cluster status indicated by the StartSector position in the CS cluster status is not flagged, reading data of one sector, denoting it as DATA1, determining a data feature status of DATA1, and updating CS status information to corresponding data feature information; and
M8: if the cluster status indicated by the StartSector position in the CS cluster status is a signature corresponding to the current file type, ending the process; otherwise, letting HCNX = HCNX + 1, and jumping to step M3. The deleted file in the FAT32 file system is recovered by dynamically calculating the cluster higher bits information HCNX of the deleted file FDT.

Further, the directory entry feature and information match-combined algorithm of dynamically calculating FDT cluster higher bits specifically comprises the following steps:
N1: calculating a maximum cluster number from a total number of partition sectors PSC and a number of sectors per cluster SPC: MAX_CLUSYER = PSC / SPC;
N2: recording Rᵢ for a deleted folder FDT, recording the attributes of the current record: LClusterNum, AccessDate, Createdate, CreateTime, and CreateTimeRefinement information;
N3: letting HCNX = 0, and when HCNX <= MAX_CLUSYER and the actual cluster higher bits of the deleted folder has not been found, letting StartSector = (HCNX ^{∗} 0x10000 + LClusterNum) ^{∗} SPC to obtain a current possible starting sector;
N4: if a cluster usage status flag indicated by the StartSector position in the F_{AT}S cluster allocation information is "used", letting HCNX = HCNX + 1, and jumping to step N3;
N5: if the cluster status indicated by the StartSector position in the CS cluster status is a status of "used", letting HCNX = HCNX + 1, and jumping to step N3;
N6: if the cluster status indicated by the StartSector position in the CS cluster status is a non-directory entry starting status, letting HCNX = HCNX + 1, and jumping to step N3;
N7: if the cluster status indicated by the StartSector position in the CS cluster status is not flagged, reading data of one sector, denoting it as DATA1, determining a data feature status of DATA1, and updating CS status information to corresponding data feature information;
N8: if the cluster status indicated by the StartSector position in the CS cluster status is a directory entry, jumping to the next step, otherwise, letting HCNX = HCNX + 1, and jumping to step N3;
N9: reading the current FDTS, acquiring FDT related information of Rᵢ and R₂, jumping to the next step upon determination that the attributes LClusterNum, AccessDate, Createdatee, CreateTime, and CreateTimeRefinement of Rᵢ match with those of R₁; otherwise, letting HCNX = HCNX + 1, and jumping to step N3; and
N10: acquiring the FDT information of a parent node of Rᵢ, denoting it as Rᵢ-PARENT, if the FDT cluster number indicated by Rᵢ-PARENT matches the cluster number recorded in the FDT of R₂, the content represented by StartSector is a subdirectory of the directory entry Rᵢ, denoting HCNX as the cluster higher bits of Rᵢ, updating the Ri cluster higher bits information, updating the CS status information StartSector position to a status of "used", and ending the process; if the FDT cluster number indicated by Rᵢ-PARENT does not match the cluster number recorded in the FDT of R₂, letting HCNX = HCNX + 1, and jumping to step N3. The deleted folder in the FAT32 file system is recovered by dynamically calculating the cluster higher bits information HCNX of the deleted folder FDT.

A FAT32 file system-based deleted file recovery system is further proposed which comprises:
an initialization module configured to initialize a file allocation table and a cluster status bitmap of the FAT32 file system;
an information reading module configured to acquire a root directory starting position from the FAT32 file system, read FDT information of each directory entry Rᵢ to form a first root directory FDT information set, and denote it as F_{DT}S;
an information parsing module configured to parse the FDT information of each directory entry Rᵢ in the first root directory FDT information set F_{DT}S = {R₁, R₂, ..., R_{N}} to obtain attributes of the FDT information of a current directory entry Rᵢ, and determine from the attributes whether each directory entry Rᵢ in the first root directory FDT information set represents a directory entry of a file or a directory entry of a folder;
a first parsing module configured to calculate a starting sector number of the directory entry Rᵢ when the directory entry Rᵢ of the root directory represents the directory entry of the file, obtain an actual physical position of a current file, and parse information of the current file directory entry Rᵢ; and
a second parsing module configured to calculate a starting sector number of the directory entry Rᵢ when the directory entry Rᵢ represents the directory entry of the folder, obtain an actual physical position of a current folder, read the FDT information of the directory entry of each sub-file of the current folder to form a second root directory FDT information set, parse all the directory entries in the second root directory FDT information set through the first parsing module to obtain attributes of the FDT information of the current directory entry, and continue recursive parsing.

Further, the first parsing module and the second parsing module comprise: a first computing module configured to dynamically calculate cluster higher bits information HCNX of the deleted file FDT with a file feature-combined algorithm of dynamically calculating FDT cluster higher bits; and a second calculating module configured to dynamically calculate the cluster higher bits information HCNX of the deleted directory FDT with a directory entry feature and information match-combined algorithm of dynamically calculating FDT cluster higher bits. The deleted file or deleted folder in the FAT32 file system is recovered by dynamically calculating the cluster higher bits information HCNX of the deleted file or the deleted folder FDT.

A computer readable storage medium is further proposed which has stored thereon a computer program that, when executed by a processor, implements the method described above.

With a file feature-combined algorithm of dynamically detecting deleted file cluster higher bits and a directory entry feature and information match-combined algorithm of dynamically detecting deleted folder cluster higher bits, the present disclosure restores the cluster higher bits information of the directory entry that is cleared upon deletion of the deleted file and the deleted folder, directly parses the actual physical position of the deleted file or folder directory entry, and correctly locates the position of the subfolder, thereby recovering the complete directory. Based on in-depth study and analysis of the directory entries of the FAT32 file system, the present disclosure realizes fast recovery of the FAT32 file system by dynamical detection in combination with file features and file system structures. The proposed method and system for recovering deleted files based on the FAT32 file system can solve the problem in the prior art that the recovery of the deleted folder may be incomplete. And the recovery effect of the method and system is better than that of the existing recovery software.

### BRIEF DESCRIPTION OF THE DRAWINGS

In order to more clearly illustrate the technical solutions in the embodiments of the present disclosure, the following drawings will be briefly described in the description of the embodiments. It is apparent that the accompanying drawings in the following description are only some of the embodiments of the present disclosure, and that those skilled in the art can further obtain other drawings based on these drawings without paying any creative effort.
FIG. 1 is a schematic flowchart of a method for recovering deleted files based on a FAT32 file system according to an embodiment of the present disclosure;
FIG. 2A is flowchart I of a file feature-combined algorithm of dynamically calculating FDT cluster higher bits for a method for recovering deleted files based on a FAT32 file system according to an embodiment of the present disclosure;
FIG. 2B is flowchart II of a file feature-combined algorithm of dynamically calculating FDT cluster higher bits for a method for recovering deleted files based on a FAT32 file system according to an embodiment of the present disclosure;
FIG. 3A is flowchart I of a directory entry feature and information match-combined algorithm of dynamically calculating FDT cluster higher bits for a method for recovering deleted files based on a FAT32 file system according to an embodiment of the present disclosure;
FIG. 3B is flowchart II of a directory entry feature and information match-combined algorithm of dynamically calculating FDT cluster higher bits for a method for recovering deleted files based on a FAT32 file system according to an embodiment of the present disclosure;
FIG. 4 is a schematic diagram of a deleted file recovery system based on a FAT32 file system according to an embodiment of the present disclosure;
FIG. 5 is a schematic diagram of a prepared test environment of an embodiment of the present disclosure; and
FIG. 6 is a diagram of a recovery result of utilizing a method and system for recovering deleted files based on a FAT32 file system according to an embodiment of the present disclosure.

### DETAILED DESCRIPTION

In order to make the objects, technical solutions and advantages of the present disclosure more clear, the present disclosure will be further described in detail below with reference to the accompanying drawings. It is apparent that the described embodiments are only a part of the embodiments of the present disclosure, and not all of them. All other embodiments obtained by a person of ordinary skill in the art based on the embodiments of the present disclosure without departing from the inventive scope fall within the scope of the disclosure.

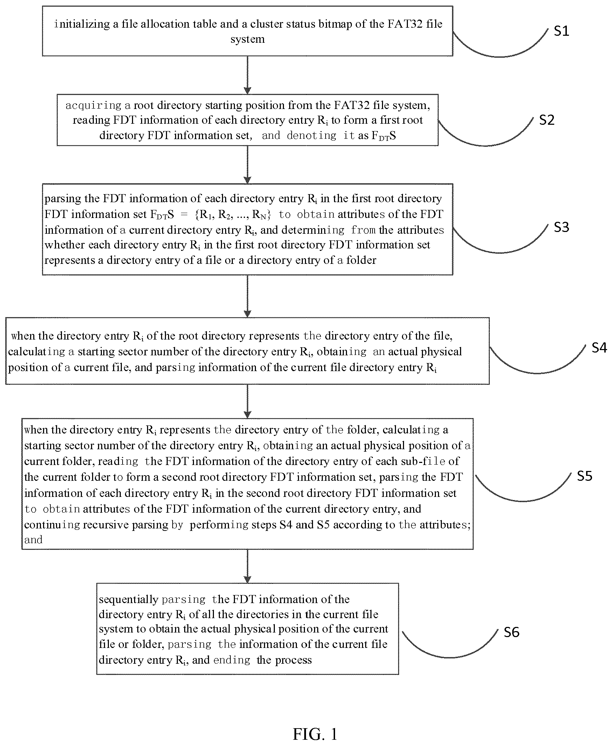

As shown in FIG. 1, a method for recovering deleted files based on a FAT32 file system is disclosed, which includes the following steps:
S1: initializing a file allocation table and a cluster status bitmap of the FAT32 file system.

The file allocation table of the FAT32 file system is initialized to obtain the cluster allocation information of the file system. Assumed that F_{AT}S indicates the file allocation table of FAT32, F_{AT}S = {C₁, C₂, ..., C_{N}}, where Cᵢ indicates whether a position space indicated by a cluster number has been used, with 0 representing an idle cluster, and other values representing that the position has already been used. The cluster status bitmap of the FAT32 file system is initialized and the cluster status information is cleared. Assumed that CS indicates the cluster status bitmap of FAT32, CS = { S₁, S₂, ..., S_{N}}, where Sᵢ represents data attributes stored in a corresponding cluster number position on a partition, with 0 indicating that the cluster number is not detected, and other values indicating actual attribute definitions of the data stored in the cluster number position. After initialization, the information contained in the file allocation table and the cluster status bitmap of the FAT32 file system may be identified and determined.

S2: acquiring a root directory starting position from the FAT32 file system, reading FDT information of each directory entry Rᵢ to form a first root directory FDT information set, and denoting it as F_{DT}S.

S3: parsing the FDT information of each directory entry Rᵢ in the first root directory FDT information set F_{DT}S = {R₁, R₂, ..., R_{N}} to obtain attributes of the FDT information of a current directory entry Rᵢ, and determining from the attributes whether each directory entry Rᵢ in the first root directory FDT information set represents a directory entry of a file or a directory entry of a folder.

The attributes contained in the directory entry Rᵢ comprise a file name/folder name FileName, a file size FileSize which is equal to 0 in case of folder, a cluster number higher bits HClusterNumber, a cluster number lower bits LClusterNum, a access date AccessDate, a creation date Createdatee, a creation time CreateTime, and a creation time exact number of milliseconds CreateTimeRefinement. Rᵢ represents the directory entry of the current folder, R₂ represents the directory entry of a parent folder of the current folder, and R₃ to R_{N} represents the directory entries of all the sub-files, including the deleted files or folders and the normal files or folders. Assume that DS={D₁, D₂, D₃, ..., D_{N}} indicates a list of area ranges occupied by a file in a partition, and the elements in the list are sorted according to the offset of the corresponding area in the file from small to large. Each element Dᵢ in the list contains two attributes: StartSector (starting sector number), and SectorCount (number of sectors occupied). Since the file may be fragmented, the range of the area occupied by a file may be a list, and if there is no fragment, the list has only one element.

Assume that D_{FDT}S = {RD₁, RD₂, RD₃, ..., RD_{N}} represents a list of area ranges occupied by a subdirectory record in the partition. The element RDᵢ in the list contains two attributes: StartSector (starting sector number), and SectorCount (number of sectors occupied). Since the contents stored by a folder may be fragmented, the range of the area occupied by a folder may be a list, and if there is no fragment, the list has only one element.

For the FAT32 file system, assume that the cluster size is N (unit: sector). For folder A, the directory entry is R_{A}. If, for D_{FDT}S, RD₁ satisfies StartSector = (R_{A-}> HClusterNumber ^{∗} 0x10000 + LClusterNum) ^{∗} N, D_{FDT}S belongs to A.

For the FAT32 file system, assume that the cluster size is N (unit: sector). For file record B, the directory entry is R_{B}. If, for D_{FDT}S, D1 satisfies StartSector = (R_{B-}> HClusterNumber ^{∗} 0x10000 + LClusterNum) ^{∗} N, D_{FDT}S belongs to B. Therefore, fast recovery of the delete file of the FAT32 file system can be achieved according to the dynamic detection in combined with the file feature and the file system structure.

S4: when the directory entry Rᵢ of the root directory represents the directory entry of the file, calculating a starting sector number of the directory entry Rᵢ, obtaining an actual physical position of a current file, and parsing information of the current file directory entry Rᵢ. The actual physical position of the normal file or deleted file is specifically calculated in this step.

In a first embodiment of the present disclosure, each directory entry Rᵢ in the first root directory FDT information set represents a directory entry of a normal file, and the actual physical position of the current file is calculated from the cluster number lower bits recorded in the directory entry Rᵢ and the cluster number higher bits recorded in the directory entry Rᵢ according to a formula StartSector = (HClusterNumber ^{∗} 0x10000 + LClusterNum) ^{∗} N, where StartSector is the starting sector number of the directory entry Rᵢ, HClusterNumber is the cluster number higher bits of the directory entry Rᵢ, LClusterNum is the cluster number lower bits of the directory entry Rᵢ, and N is a cluster size of the directory entry Rᵢ in unit of sectors.

In a second embodiment of the present disclosure, the directory entry Rᵢ in the first root directory FDT information set represents a directory entry of a deleted file, and the actual physical position of the current file is calculated, according to a formula StartSector = (HCNX ^{∗} 0x10000 + LClusterNum) ^{∗} N, from the cluster number lower bits recorded in the directory entry Rᵢ and the cluster number higher bits calculated with a file feature-combined algorithm of dynamically calculating FDT cluster higher bits, where StartSector is the starting sector number of the directory entry Rᵢ, HCNX is the cluster number higher bits calculated with the file feature-combined algorithm of dynamically calculating FDT cluster higher bits, LClusterNum is the cluster number lower bits of the directory entry Rᵢ, and N is a cluster size of the directory entry Rᵢ in unit of sectors.

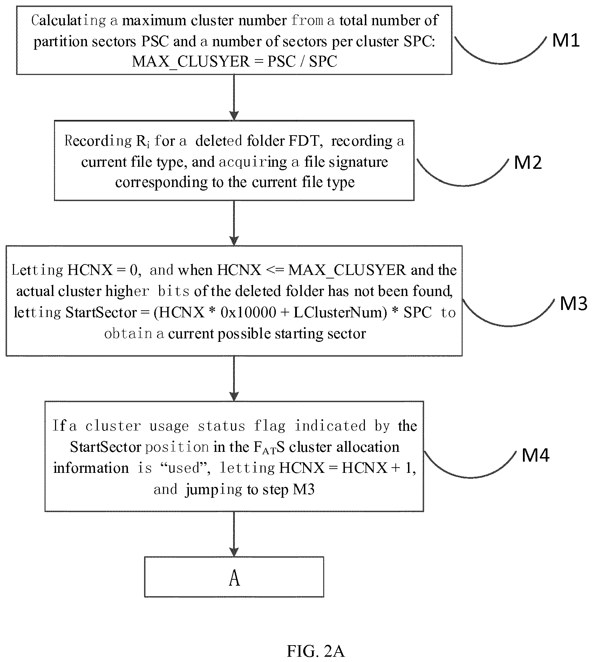

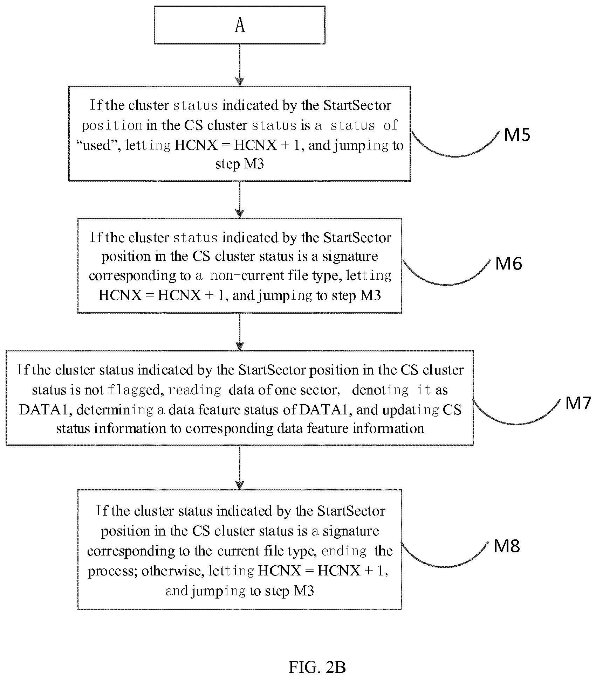

As shown in FIG. 2, the file feature-combined algorithm of dynamically calculating FDT cluster higher bits specifically comprises the following steps:
M1: calculating a maximum cluster number from a total number of partition sectors PSC and a number of sectors per cluster SPC: MAX_CLUSYER = PSC / SPC;
M2: recording Rᵢ for a deleted folder FDT, recording a current file type, and acquiring a file signature corresponding to the current file type;
M3: letting HCNX = 0, and when HCNX <= MAX_CLUSYER and the actual cluster higher bits of the deleted folder has not been found, letting StartSector = (HCNX ^{∗} 0x10000 + LClusterNum) ^{∗} SPC to obtain a current possible starting sector;
M4: if a cluster usage status flag indicated by the StartSector position in the F_{AT}S cluster allocation information is "used", letting HCNX = HCNX + 1, and jumping to step M3;
M5: if the cluster status indicated by the StartSector position in the CS cluster status is a status of "used", letting HCNX = HCNX + 1, and jumping to step M3;
M6: if the cluster status indicated by the StartSector position in the CS cluster status is a signature corresponding to a non-current file type, letting HCNX = HCNX + 1, and jumping to step M3;
M7: if the cluster status indicated by the StartSector position in the CS cluster status is not flagged, reading data of one sector, denoting it as DATA1, determining a data feature status of DATA1, and updating CS status information to corresponding data feature information; and
M8: if the cluster status indicated by the StartSector position in the CS cluster status is a signature corresponding to the current file type, ending the process; otherwise, letting HCNX = HCNX + 1, and jumping to step M3.

Through this algorithm, the cluster higher bits information HCNX of the deleted file FDT can be calculated, including its starting sector, cluster status bitmap and corresponding data feature information.

S5: when the directory entry Rᵢ represents the directory entry of the folder, calculating a starting sector number of the directory entry Rᵢ, obtaining an actual physical position of a current folder, reading the FDT information of the directory entry of each sub-file of the current folder to form a second root directory FDT information set, parsing the FDT information of each directory entry Rᵢ in the second root directory FDT information set to obtain attributes of the FDT information of the current directory entry, and continuing recursive parsing by performing steps S4 and S5 according to the attributes.

In a third embodiment of the present disclosure, the directory entry Rᵢ in the first root directory FDT information set represents a directory entry of a normal folder, and the actual physical position of the current folder is calculated from the cluster number lower bits recorded in the directory entry Rᵢ and the cluster number high bits recorded in the directory entry Rᵢ according to a formula StartSector = (HClusterNumber ^{∗} 0x10000 + LClusterNum) ^{∗} N, wherein StartSector is the starting sector number of the directory entry Rᵢ, HClusterNumber is the cluster number higher bits of the directory entry Rᵢ, LClusterNum is the cluster number lower bits of the directory entry Rᵢ, and N is a cluster size of the directory entry Rᵢ in unit of sectors.

In a fourth embodiment of the present disclosure, the directory entry Rᵢ in the first root directory FDT information set represents a directory entry of a deleted folder, and the actual physical position of the deleted file is calculated, according to a formula StartSector = (HCNX ^{∗} 0x10000 + LClusterNum) ^{∗} N, from the cluster number lower bits recorded in the directory entry Rᵢ and the cluster number higher bits calculated with a directory entry feature and information match-combined algorithm of dynamically calculating FDT cluster higher bits, where StartSector is the starting sector number of the directory entry Rᵢ, HCNX is the cluster number higher bits calculated with the directory entry feature and information match-combined algorithm of dynamically calculating FDT cluster higher bits, LClusterNum is the cluster number lower bits of the directory entry Rᵢ, and N is a cluster size of the directory entry Rᵢ in unit of sectors.

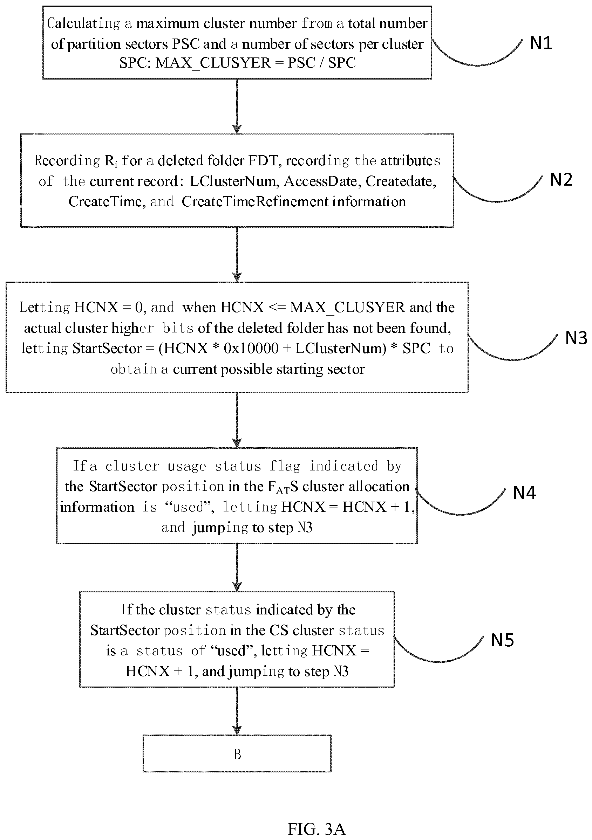

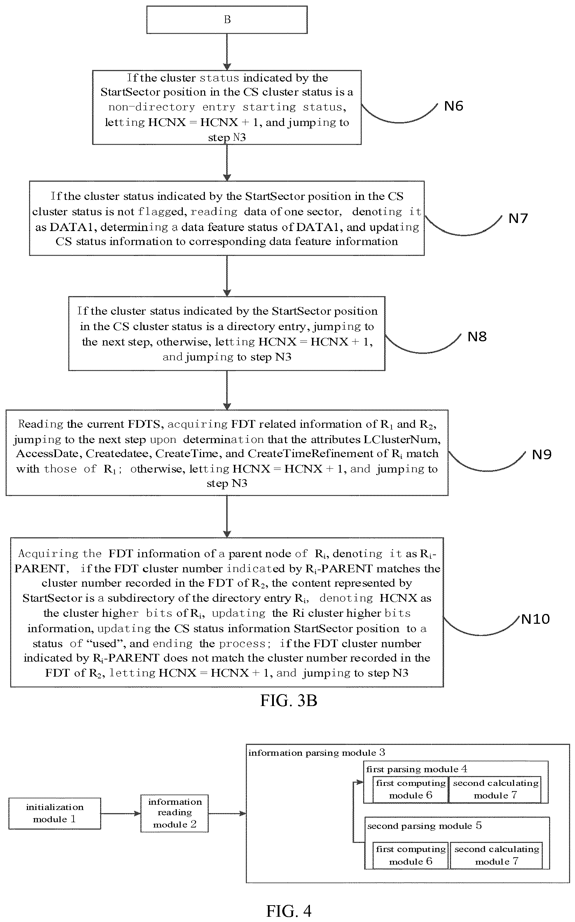

As shown in FIG. 3, the directory entry feature and information match-combined algorithm of dynamically calculating FDT cluster higher bits specifically comprises the following steps:
N1: calculating a maximum cluster number from a total number of partition sectors PSC and a number of sectors per cluster SPC: MAX_CLUSYER = PSC / SPC;
N2: recording Rᵢ for a deleted folder FDT, recording the attributes of the current record: LClusterNum, AccessDate, Createdate, CreateTime, and CreateTimeRefinement information;
N3: letting HCNX = 0, and when HCNX <= MAX_CLUSYER and the actual cluster higher bits of the deleted folder has not been found, letting StartSector = (HCNX ^{∗} 0x10000 + LClusterNum) ^{∗} SPC to obtain a current possible starting sector;
N4: if a cluster usage status flag indicated by the StartSector position in the F_{AT}S cluster allocation information is "used", letting HCNX = HCNX + 1, and jumping to step N3;
N5: if the cluster status indicated by the StartSector position in the CS cluster status is a status of "used", letting HCNX = HCNX + 1, and jumping to step N3;
N6: if the cluster status indicated by the StartSector position in the CS cluster status is a non-directory entry starting status, letting HCNX = HCNX + 1, and jumping to step N3;
N7: if the cluster status indicated by the StartSector position in the CS cluster status is not flagged, reading data of one sector, denoting it as DATA1, determining a data feature status of DATA1, and updating CS status information to corresponding data feature information;
N8: if the cluster status indicated by the StartSector position in the CS cluster status is a directory entry, jumping to the next step, otherwise, letting HCNX = HCNX + 1, and jumping to step N3;
N9: reading the current FDTS, acquiring FDT related information of Rᵢ and R₂, jumping to the next step upon determination that the attributes LClusterNum, AccessDate, Createdatee, CreateTime, and CreateTimeRefinement of Rᵢ match with those of R₁; otherwise, letting HCNX = HCNX + 1, and jumping to step N3; and
N10: acquiring the FDT information of a parent node of Rᵢ, denoting it as Rᵢ-PARENT, if the FDT cluster number indicated by Rᵢ-PARENT matches the cluster number recorded in the FDT of R₂, the content represented by StartSector is a subdirectory of the directory entry Rᵢ, denoting HCNX as the cluster higher bits of Rᵢ, updating the Ri cluster higher bits information, updating the CS status information StartSector position to a status of "used", and ending the process; if the FDT cluster number indicated by Rᵢ-PARENT does not match the cluster number recorded in the FDT of R₂, letting HCNX = HCNX + 1, and jumping to step N3. Through this algorithm, the cluster higher bits information HCNX of the delete folder FDT can be calculated, including its starting sector, cluster status bitmap and corresponding data feature information.

The continuing recursive parsing by performing steps S4 and S5 according to the attributes in step S5 specifically comprises the following steps:
If the directory entry Rᵢ in the second root directory FDT information set represents a directory entry of a normal file, calculating the actual physical position of the current file from the cluster number lower bits recorded in the directory entry Rᵢ and the cluster number higher bits recorded in the directory entry Rᵢ according to a formula StartSector = (R_{B-}> HClusterNumber ^{∗} 0x10000 + LClusterNum) ^{∗} N, where StartSector is the starting sector number of the directory entry Rᵢ, HClusterNumber is the cluster number higher bits of the directory entry Rᵢ, LClusterNum is the cluster number lower bits of the directory entry Rᵢ, and N is a cluster size of the directory entry Rᵢ in unit of sectors.

If the directory entry Rᵢ in the second root directory FDT information set represents a directory entry of a deleted file, calculating, according to a formula StartSector = (R_{B-}> HClusterNumber ^{∗} 0x10000 + LClusterNum) ^{∗} N, the actual physical position of the current file from the cluster number lower bits recorded in the directory entry Rᵢ and the cluster number higher bits calculated with a file feature-combined algorithm of dynamically calculating FDT cluster higher bits, where StartSector is the starting sector number of the directory entry Rᵢ, HCNX is the cluster number higher bits calculated with the file feature-combined algorithm of dynamically calculating FDT cluster higher bits, LClusterNum is the cluster number lower bits of the directory entry Rᵢ, and N is a cluster size of the directory entry Rᵢ in unit of sectors.

As shown in FIG. 2, the file feature-combined algorithm of dynamically calculating FDT cluster higher bits specifically comprises the following steps:
M1: calculating a maximum cluster number from a total number of partition sectors PSC and a number of sectors per cluster SPC: MAX_CLUSYER = PSC / SPC;
M2: recording Rᵢ for a deleted folder FDT, recording a current file type, and acquiring a file signature corresponding to the current file type;
M3: letting HCNX = 0, and when HCNX <= MAX_CLUSYER and the actual cluster higher bits of the deleted folder has not been found, letting StartSector = (HCNX ^{∗} 0x10000 + LClusterNum) ^{∗} SPC to obtain a current possible starting sector;
M4: if a cluster usage status flag indicated by the StartSector position in the F_{AT}S cluster allocation information is "used", letting HCNX = HCNX + 1, and jumping to step M3;
M5: if the cluster status indicated by the StartSector position in the CS cluster status is a status of "used", letting HCNX = HCNX + 1, and jumping to step M3;
M6: if the cluster status indicated by the StartSector position in the CS cluster status is a signature corresponding to a non-current file type, letting HCNX = HCNX + 1, and jumping to step M3;
M7: if the cluster status indicated by the StartSector position in the CS cluster status is not flagged, reading data of one sector, denoting it as DATA1, determining a data feature status of DATA1, and updating CS status information to corresponding data feature information; and
M8: if the cluster status indicated by the StartSector position in the CS cluster status is a signature corresponding to the current file type, ending the process; otherwise, letting HCNX = HCNX + 1, and jumping to step M3.

Through this algorithm, the cluster higher bits information HCNX of the deleted file FDT can be calculated, including its starting sector, cluster status bitmap and corresponding data feature information.

The continuing recursive parsing by performing steps S4 and S5 according to the attributes in step S5 specifically comprises the following steps:
If the directory entry Rᵢ in the second root directory FDT information set represents a directory entry of a normal folder, calculating the actual physical position of the current folder from the cluster number lower bits recorded in the directory entry Rᵢ and the cluster number high bits recorded in the directory entry Rᵢ according to a formula StartSector = (HClusterNumber ^{∗} 0x10000 + LClusterNum) ^{∗} N, where StartSector is the starting sector number of the directory entry Rᵢ, HClusterNumber is the cluster number higher bits of the directory entry Rᵢ, LClusterNum is the cluster number lower bits of the directory entry Rᵢ, and N is a cluster size of the directory entry Rᵢ in unit of sectors.

If the directory entry Rᵢ in the second root directory FDT information set represents a directory entry of a deleted folder, calculating, according to a formula StartSector = (HCNX ^{∗} 0x10000 + LClusterNum) ^{∗} N, the actual physical position of the deleted file from the cluster number lower bits recorded in the directory entry Rᵢ and the cluster number higher bits calculated with a directory entry feature and information match-combined algorithm of dynamically calculating FDT cluster higher bits, where StartSector is the starting sector number of the directory entry Rᵢ, HCNX is the cluster number higher bits calculated with the directory entry feature and information match-combined algorithm of dynamically calculating FDT cluster higher bits, LClusterNum is the cluster number lower bits of the directory entry Rᵢ, and N is a cluster size of the directory entry Rᵢ in unit of sectors. This step specifically calculates the actual physical position of the normal folder or the deleted folder, and further calculates the actual physical position of the normal file or the deleted file in the normal folder or the deleted folder.

As shown in FIG. 3, the directory entry feature and information match-combined algorithm of dynamically calculating FDT cluster higher bits specifically comprises the following steps:
N1: calculating a maximum cluster number from a total number of partition sectors PSC and a number of sectors per cluster SPC: MAX_CLUSYFR = PSC / SPC;
N2: recording Rᵢ for a deleted folder FDT, recording the attributes of the current record: LClusterNum, AccessDate, Createdate, CreateTime, and CreateTimeRefinement information;
N3: letting HCNX = 0, and when HCNX <= MAX_CLUSYER and the actual cluster higher bits of the deleted folder has not been found, letting StartSector = (HCNX ^{∗} 0x10000 + LClusterNum) ^{∗} SPC to obtain a current possible starting sector;
N4: if a cluster usage status flag indicated by the StartSector position in the F_{AT}S cluster allocation information is "used", letting HCNX = HCNX + 1, and jumping to step N3;
N5: if the cluster status indicated by the StartSector position in the CS cluster status is a status of "used", letting HCNX = HCNX + 1, and jumping to step N3;
N6: if the cluster status indicated by the StartSector position in the CS cluster status is a non-directory entry starting status, letting HCNX = HCNX + 1, and jumping to step N3;
N7: if the cluster status indicated by the StartSector position in the CS cluster status is not flagged, reading data of one sector, denoting it as DATA1, determining a data feature status of DATA1, and updating CS status information to corresponding data feature information;
N8: if the cluster status indicated by the StartSector position in the CS cluster status is a directory entry, jumping to the next step, otherwise, letting HCNX = HCNX + 1, and jumping to step N3;
N9: reading the current FDTS, acquiring FDT related information of R₁ and R₂, jumping to the next step upon determination that the attributes LClusterNum, AccessDate, Createdatee, CreateTime, and CreateTimeRefinement of Rᵢ match with those of R₁; otherwise, letting HCNX = HCNX + 1, and jumping to step N3; and
N10: acquiring the FDT information of a parent node of Rᵢ, denoting it as Rᵢ-PARENT, if the FDT cluster number indicated by Rᵢ-PARENT matches the cluster number recorded in the FDT of R₂, the content represented by StartSector is a subdirectory of the directory entry Rᵢ, denoting HCNX as the cluster higher bits of Rᵢ, updating the Ri cluster higher bits information, updating the CS status information StartSector position to a status of "used", and ending the process; if the FDT cluster number indicated by Rᵢ-PARENT does not match the cluster number recorded in the FDT of R₂, letting HCNX = HCNX + 1, and jumping to step N3. Through this algorithm, the cluster higher bits information HCNX of the delete folder FDT can be calculated, including its starting sector, cluster status bitmap and corresponding data feature information.

S6: sequentially parsing the FDT information of the directory entry Rᵢ of all the directories in the current file system to obtain the actual physical position of the current file or folder, parsing the information of the current file directory entry Rᵢ, and ending the process.

The present disclosure further proposes a FAT32 file system-based deleted file recovery system comprising:
An initialization module 1 configured to initialize a file allocation table and a cluster status bitmap of the FAT32 file system;
An information reading module 2 configured to acquire a root directory starting position from the FAT32 file system, read FDT information of each directory entry Rᵢ to form a first root directory FDT information set, and denote it as F_{DT}S;
An information parsing module 3 configured to parse the FDT information of each directory entry Rᵢ in the first root directory FDT information set F_{DT}S = {R₁, R₂, ..., R_{N}} to obtain attributes of the FDT information of a current directory entry Rᵢ, and determine from the attributes whether each directory entry Rᵢ in the first root directory FDT information set represents a directory entry of a file or a directory entry of a folder;
A first parsing module 4 configured to calculate a starting sector number of the directory entry Rᵢ when the directory entry Rᵢ of the root directory represents the directory entry of the file, obtain an actual physical position of a current file, and parse information of the current file directory entry Rᵢ; and
The first parsing module 4 and the second parsing module 5 comprise: a first computing module 6 configured to dynamically calculate cluster higher bits information HCNX of the deleted file FDT with a file feature-combined algorithm of dynamically calculating FDT cluster higher bits; and a second calculating module 7 configured to dynamically calculate the cluster higher bits information HCNX of the deleted directory FDT with a directory entry feature and information match-combined algorithm of dynamically calculating FDT cluster higher bits.

The first parsing module 4 and the second parsing module 5 include: a first calculating module 6 for dynamically calculating the cluster high-order information HCNX of the deleted file FDT by dynamically calculating the FDT cluster high-order algorithm in combination with the file feature; and a second calculating module 7 for combining Directory entry Feature and Information Matching Dynamic Calculation The FDT cluster high-order algorithm dynamically calculates the cluster high-order information HCNX of the folder FDT.

The file of the FAT32 file system is determined by the initialization module 1, the information reading module 2, and the information parsing module 3 to obtain the position and attributes of the root directory of the FAT32 file system. The actual physical position of the deleted file and the deleted folder is parsed then by the first parsing module 4 and the second parsing module 5. This system can quickly and efficiently calculate the actual physical position and related information of the sub-files in the deleted folder, and further quickly recover the deleted files of the FAT32 file system.

There is further proposed a computer readable storage medium having stored thereon a computer program that, when executed by a processor, implements the method described above. The computer readable storage medium can reside on a computer, a mobile terminal, or other device having computing capability.

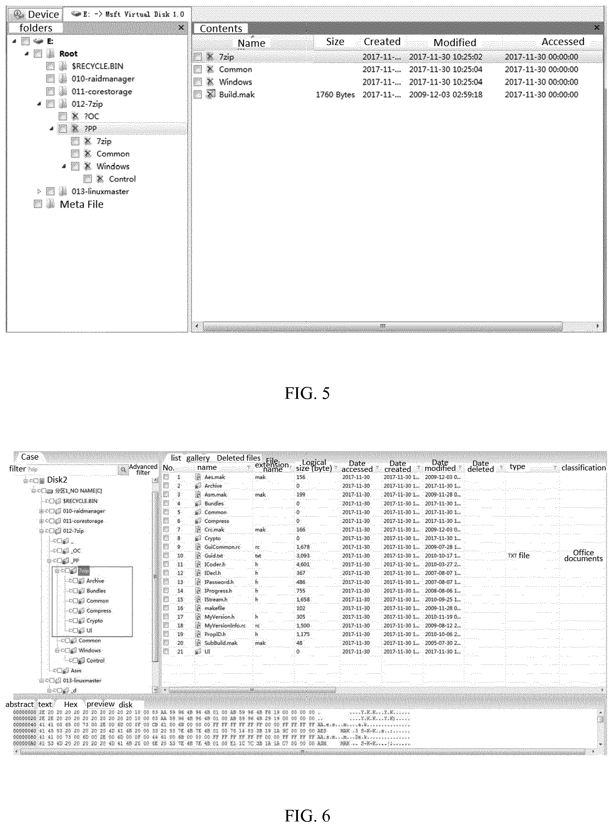

Based on the above-mentioned method and system for recovering deleted files based on the FAT32 file system, a test environment is prepared below, as shown in FIG. 5:
1) Prepare a disk or USB flash drive and format it as FAT32 partitions;
2) Copy a large file larger than 1G into the formatted partitions;
3) Copy multiple multi-level folders to the partitions to which they belong;
4) Delete all subdirectories under the multi-level folder respectively;
5) Using Rstudio software to compare with the method described in the present disclosure. The test results are as follows:
   A complete and effective recovery can be obtained by recovering the files in the same deleted folder in the manner described in the present disclosure, and the files in the deleted folder can be quickly recovered, providing a better recovery effect than the Rstudio software or other deletion software.

With a file feature-combined algorithm of dynamically detecting deleted file cluster higher bits and a directory entry feature and information match-combined algorithm of dynamically detecting deleted folder cluster higher bits, the present disclosure restores the cluster higher bits information of the directory entry that is cleared upon deletion of the deleted file and the deleted folder, directly parses the actual physical position of the deleted file or folder directory entry, and correctly locates the position of the subfolder, thereby recovering the complete directory. Based on in-depth study and analysis of the directory entries of the FAT32 file system, the present disclosure realizes fast recovery of the FAT32 file system by dynamical detection in combination with file features and file system structures. The proposed method and system for recovering deleted files based on the FAT32 file system can solve the problem in the prior art that the recovery of the deleted folder may be incomplete. Using the file feature-combined algorithm of dynamically detecting deleted file cluster higher bits and the directory entry feature and information match-combined algorithm of dynamically detecting deleted folder cluster higher bits, the recovery effect of the method and system is better than that of the existing recovery software.

Various modifications and changes of the embodiments of the present disclosure can be made by those skilled in the art without departing from the spirit and scope of the disclosure. In this manner, the present disclosure is intended to encompass such modifications and changes if these modifications and changes fall within the scope of the claims of the present disclosure and equivalents thereof. The word "comprising" does not exclude the presence of other elements or steps that are not recited in the claims. The mere fact that certain measures are recited in mutually different dependent claims does not indicate that these measures cannot be used to advantage. Any reference signs in the claims should not be construed as limiting of the scope.

## Claims

1. A method for recovering deleted files based on a FAT32 file system, **characterized in** comprising the steps of:
S1: initializing a file allocation table and a cluster status bitmap of the FAT32 file system;
S2: acquiring a root directory starting position from the FAT32 file system, reading FDT information of each directory entry Rᵢ to form a first root directory FDT information set, and denoting it as F_{DT}S;
S3: parsing the FDT information of each directory entry Rᵢ in the first root directory FDT information set F_{DT}S = {R₁, R₂, ..., R_{N}} to obtain attributes of the FDT information of a current directory entry Rᵢ, and determining from the attributes whether each directory entry Rᵢ in the first root directory FDT information set represents a directory entry of a file or a directory entry of a folder;
S4: when the directory entry Rᵢ of the root directory represents the directory entry of the file, calculating a starting sector number of the directory entry Rᵢ, obtaining an actual physical position of a current file, and parsing information of the current file directory entry Rᵢ;
S5: when the directory entry Rᵢ represents the directory entry of the folder, calculating a starting sector number of the directory entry Rᵢ, obtaining an actual physical position of a current folder, reading the FDT information of the directory entry of each sub-file of the current folder to form a second root directory FDT information set, parsing the FDT information of each directory entry Rᵢ in the second root directory FDT information set to obtain attributes of the FDT information of the current directory entry, and continuing recursive parsing by performing steps S4 and S5 according to the attributes; and
S6: sequentially parsing the FDT information of the directory entry Rᵢ of all the directories in the current file system to obtain the actual physical position of the current file or folder, parsing the information of the current file directory entry Rᵢ, and ending the process.

2. The method for recovering deleted files based on the FAT32 file system according to claim 1, **characterized in** initializing the file allocation table of the FAT32 file system to obtain cluster allocation information of the file system, with F_{AT}S indicating the file allocation table of FAT32, F_{AT}S = {C₁, C₂, ..., C_{N}}, wherein Cᵢ indicates whether a position space indicated by a cluster number has been used; initializing the cluster status bitmap of the FAT32 file system, and clearing cluster status information, with CS indicating the cluster status bitmap of FAT32, CS = {S₁, S₂, ..., S_{N}}, wherein Sᵢ represents data attributes stored in a corresponding cluster number position on a partition.

3. The method for recovering deleted files based on the FAT32 file system according to claim 1, **characterized in that** the attributes contained in the directory entry Rᵢ comprise a file name/folder name FileName, a file size FileSize which is equal to 0 in case of folder, a cluster number higher bits HClusterNumber, a cluster number lower bits LClusterNum, a access date AccessDate, a creation date Createdatee, a creation time CreateTime, and a creation time exact number of milliseconds CreateTimeRefinement.

4. The method for recovering deleted files based on the FAT32 file system according to claim 3, **characterized in that** the calculating the starting sector number of the directory entry Rᵢ in step S4 specifically comprises the following steps:
if each directory entry Rᵢ in the first root directory FDT information set represents a directory entry of a normal file, calculating the actual physical position of the current file from the cluster number lower bits recorded in the directory entry Rᵢ and the cluster number higher bits recorded in the directory entry Rᵢ according to a formula StartSector = (HClusterNumber ^{∗} 0x10000 + LClusterNum) ^{∗} N, wherein StartSector is the starting sector number of the directory entry Rᵢ, HClusterNumber is the cluster number higher bits of the directory entry Rᵢ, LClusterNum is the cluster number lower bits of the directory entry Rᵢ, and N is a cluster size of the directory entry Rᵢ in unit of sectors; and
if the directory entry Rᵢ in the first root directory FDT information set represents a directory entry of a deleted file, calculating, according to a formula StartSector = (HCNX ^{∗} 0x10000 + LClusterNum) ^{∗} N, the actual physical position of the current file from the cluster number lower bits recorded in the directory entry Rᵢ and the cluster number higher bits calculated with a file feature-combined algorithm of dynamically calculating FDT cluster higher bits, wherein StartSector is the starting sector number of the directory entry Rᵢ, HCNX is the cluster number higher bits calculated with the file feature-combined algorithm of dynamically calculating FDT cluster higher bits, LClusterNum is the cluster number lower bits of the directory entry Rᵢ, and N is a cluster size of the directory entry Rᵢ in unit of sectors.

5. The method for recovering deleted files based on the FAT32 file system according to claim 3, **characterized in that** the calculating the starting sector number of the directory entry Rᵢ in step S5 specifically comprises the following steps:
if the directory entry Rᵢ in the first root directory FDT information set represents a directory entry of a normal folder, calculating the actual physical position of the current folder from the cluster number lower bits recorded in the directory entry Rᵢ and the cluster number high bits recorded in the directory entry Rᵢ according to a formula StartSector = (HClusterNumber ^{∗} 0x10000 + LClusterNum) ^{∗} N, wherein StartSector is the starting sector number of the directory entry Rᵢ, HClusterNumber is the cluster number higher bits of the directory entry Rᵢ, LClusterNum is the cluster number lower bits of the directory entry Rᵢ, and N is a cluster size of the directory entry Rᵢ in unit of sectors; and
if the directory entry Rᵢ in the first root directory FDT information set represents a directory entry of a deleted folder, calculating, according to a formula StartSector = (HCNX ^{∗} 0x10000 + LClusterNum) ^{∗} N, the actual physical position of the deleted file from the cluster number lower bits recorded in the directory entry Rᵢ and the cluster number higher bits calculated with a directory entry feature and information match-combined algorithm of dynamically calculating FDT cluster higher bits, wherein StartSector is the starting sector number of the directory entry Rᵢ, HCNX is the cluster number higher bits calculated with the directory entry feature and information match-combined algorithm of dynamically calculating FDT cluster higher bits, LClusterNum is the cluster number lower bits of the directory entry Rᵢ, and N is a cluster size of the directory entry Rᵢ in unit of sectors.

6. The method for recovering deleted files based on the FAT32 file system according to claim 3, **characterized in that** the continuing recursive parsing by performing steps S4 and S5 according to the attributes in step S5 specifically comprises the following steps:
if the directory entry Rᵢ in the second root directory FDT information set represents a directory entry of a normal file, calculating the actual physical position of the current file from the cluster number lower bits recorded in the directory entry Rᵢ and the cluster number higher bits recorded in the directory entry Rᵢ according to a formula StartSector = (R_{B-}> HClusterNumber ^{∗} 0x10000 + LClusterNum) ^{∗} N, wherein StartSector is the starting sector number of the directory entry Rᵢ, HClusterNumber is the cluster number higher bits of the directory entry Rᵢ, LClusterNum is the cluster number lower bits of the directory entry Rᵢ, and N is a cluster size of the directory entry Rᵢ in unit of sectors; and
if the directory entry Rᵢ in the second root directory FDT information set represents a directory entry of a deleted file, calculating, according to a formula StartSector = (R_{B-}> HClusterNumber ^{∗} 0x10000 + LClusterNum) ^{∗} N, the actual physical position of the current file from the cluster number lower bits recorded in the directory entry Rᵢ and the cluster number higher bits calculated with a file feature-combined algorithm of dynamically calculating FDT cluster higher bits, wherein StartSector is the starting sector number of the directory entry Rᵢ, HCNX is the cluster number higher bits calculated with the file feature-combined algorithm of dynamically calculating FDT cluster higher bits, LClusterNum is the cluster number lower bits of the directory entry Rᵢ, and N is a cluster size of the directory entry Rᵢ in unit of sectors.

7. The method for recovering deleted files based on the FAT32 file system according to claim 3, **characterized in that** the continuing recursive parsing by performing steps S4 and S5 according to the attributes in step S5 specifically comprises the following steps:
if the directory entry Rᵢ in the second root directory FDT information set represents a directory entry of a normal folder, calculating the actual physical position of the current folder from the cluster number lower bits recorded in the directory entry Rᵢ and the cluster number high bits recorded in the directory entry Rᵢ according to a formula StartSector = (HClusterNumber ^{∗} 0x10000 + LClusterNum) ^{∗} N, wherein StartSector is the starting sector number of the directory entry Rᵢ, HClusterNumber is the cluster number higher bits of the directory entry Rᵢ, LClusterNum is the cluster number lower bits of the directory entry Rᵢ, and N is a cluster size of the directory entry Rᵢ in unit of sectors; and
if the directory entry Rᵢ in the second root directory FDT information set represents a directory entry of a deleted folder, calculating, according to a formula StartSector = (HCNX ^{∗} 0x10000 + LClusterNum) ^{∗} N, the actual physical position of the deleted file from the cluster number lower bits recorded in the directory entry Rᵢ and the cluster number higher bits calculated with a directory entry feature and information match-combined algorithm of dynamically calculating FDT cluster higher bits, wherein StartSector is the starting sector number of the directory entry Rᵢ, HCNX is the cluster number higher bits calculated with the directory entry feature and information match-combined algorithm of dynamically calculating FDT cluster higher bits, LClusterNum is the cluster number lower bits of the directory entry Rᵢ, and N is a cluster size of the directory entry Rᵢ in unit of sectors.

8. The method for recovering deleted files based on the FAT32 file system according to any one of claims 2 to 7, **characterized in that** the file feature-combined algorithm of dynamically calculating FDT cluster higher bits specifically comprises the following steps:
M1: calculating a maximum cluster number from a total number of partition sectors PSC and a number of sectors per cluster SPC: MAX_CLUSYER = PSC / SPC;
M2: recording Rᵢ for a deleted folder FDT, recording a current file type, and acquiring a file signature corresponding to the current file type;
M3: letting HCNX = 0, and when HCNX <= MAX_CLUSYER and the actual cluster higher bits of the deleted folder has not been found, letting StartSector = (HCNX ^{∗} 0x10000 + LClusterNum) ^{∗} SPC to obtain a current possible starting sector;
M4: if a cluster usage status flag indicated by the StartSector position in the F_{AT}S cluster allocation information is "used", letting HCNX = HCNX + 1, and jumping to step M3;
M5: if the cluster status indicated by the StartSector position in the CS cluster status is a status of "used", letting HCNX = HCNX + 1, and jumping to step M3;
M6: if the cluster status indicated by the StartSector position in the CS cluster status is a signature corresponding to a non-current file type, letting HCNX = HCNX + 1, and jumping to step M3;
M7: if the cluster status indicated by the StartSector position in the CS cluster status is not flagged, reading data of one sector, denoting it as DATA1, determining a data feature status of DATA1, and updating CS status information to corresponding data feature information; and
M8: if the cluster status indicated by the StartSector position in the CS cluster status is a signature corresponding to the current file type, ending the process; otherwise, letting HCNX = HCNX + 1, and jumping to step M3.

9. The method for recovering deleted files based on the FAT32 file system according to any one of claims 2 to 7, **characterized in that** the directory entry feature and information match-combined algorithm of dynamically calculating FDT cluster higher bits specifically comprises the following steps:
N1: calculating a maximum cluster number from a total number of partition sectors PSC and a number of sectors per cluster SPC: MAX_CLUSYER = PSC / SPC;
N2: recording Rᵢ for a deleted folder FDT, recording the attributes of the current record: LClusterNum, AccessDate, Createdate, CreateTime, and CreateTimeRefinement information;
N3: letting HCNX = 0, and when HCNX <= MAX_CLUSYER and the actual cluster higher bits of the deleted folder has not been found, letting StartSector = (HCNX ^{∗} 0x10000 + LClusterNum) ^{∗} SPC to obtain a current possible starting sector;
N4: if a cluster usage status flag indicated by the StartSector position in the F_{AT}S cluster allocation information is "used", letting HCNX = HCNX + 1, and jumping to step N3;
N5: if the cluster status indicated by the StartSector position in the CS cluster status is a status of "used", letting HCNX = HCNX + 1, and jumping to step N3;
N6: if the cluster status indicated by the StartSector position in the CS cluster status is a non-directory entry starting status, letting HCNX = HCNX + 1, and jumping to step N3;
N7: if the cluster status indicated by the StartSector position in the CS cluster status is not flagged, reading data of one sector, denoting it as DATA1, determining a data feature status of DATA1, and updating CS status information to corresponding data feature information;
N8: if the cluster status indicated by the StartSector position in the CS cluster status is a directory entry, jumping to the next step, otherwise, letting HCNX = HCNX + 1, and jumping to step N3;
N9: reading the current FDTS, acquiring FDT related information of R₁ and R₂, jumping to the next step upon determination that the attributes LClusterNum, AccessDate, Createdatee, CreateTime, and CreateTimeRefinement of Rᵢ match with those of R₁; otherwise, letting HCNX = HCNX + 1, and jumping to step N3; and
N10: acquiring the FDT information of a parent node of Rᵢ, denoting it as Rᵢ-PARENT, if the FDT cluster number indicated by Rᵢ-PARENT matches the cluster number recorded in the FDT of R₂, the content represented by StartSector is a subdirectory of the directory entry Rᵢ, denoting HCNX as the cluster higher bits of Rᵢ, updating the Ri cluster higher bits information, updating the CS status information StartSector position to a status of "used", and ending the process; if the FDT cluster number indicated by Rᵢ-PARENT does not match the cluster number recorded in the FDT of R₂, letting HCNX = HCNX + 1, and jumping to step N3.

10. A FAT32 file system-based deleted file recovery system, **characterized in** comprising:
an initialization module configured to initialize a file allocation table and a cluster status bitmap of the FAT32 file system;
an information reading module configured to acquire a root directory starting position from the FAT32 file system, read FDT information of each directory entry Rᵢ to form a first root directory FDT information set, and denote it as F_{DT}S;
an information parsing module configured to parse the FDT information of each directory entry Rᵢ in the first root directory FDT information set F_{DT}S = {R₁, R₂, ..., R_{N}} to obtain attributes of the FDT information of a current directory entry Rᵢ, and determine from the attributes whether each directory entry Rᵢ in the first root directory FDT information set represents a directory entry of a file or a directory entry of a folder;
a first parsing module configured to calculate a starting sector number of the directory entry Rᵢ when the directory entry Rᵢ of the root directory represents the directory entry of the file, obtain an actual physical position of a current file, and parse information of the current file directory entry Rᵢ; and
a second parsing module configured to calculate a starting sector number of the directory entry Rᵢ when the directory entry Rᵢ represents the directory entry of the folder, obtain an actual physical position of a current folder, read the FDT information of the directory entry of each sub-file of the current folder to form a second root directory FDT information set, parse all the directory entries in the second root directory FDT information set through the first parsing module to obtain attributes of the FDT information of the current directory entry, and continue recursive parsing.

11. The FAT32 file system-based deleted file recovery system according to claim 10, **characterized in that** the first parsing module and the second parsing module comprise: a first computing module configured to dynamically calculate cluster higher bits information HCNX of the deleted file FDT with a file feature-combined algorithm of dynamically calculating FDT cluster higher bits; and a second calculating module configured to dynamically calculate the cluster higher bits information HCNX of the deleted directory FDT with a directory entry feature and information match-combined algorithm of dynamically calculating FDT cluster higher bits.

12. A computer readable storage medium having stored thereon a computer program, **characterized in that** the program, when executed by a processor, implements the method of any one of claims 1 to 9.
